Europäisches Patentamt

European Patent Office

Office européen des brevets

(19)

(11) Publication number: **0 375 031**
**A2**

(12) # EUROPEAN PATENT APPLICATION

(21) Application number: **89203171.7**

(51) Int. Cl.⁵: **A23L 1/308**

(22) Date of filing: **13.12.89**

(30) Priority: **21.12.88 GB 8829833**

(43) Date of publication of application:
**27.06.90 Bulletin 90/26**

(84) Designated Contracting States:
**AT BE CH DE ES FR GB GR IT LI NL SE**

(71) Applicant: **UNILEVER NV**
**Burgemeester s'Jacobplein 1 P.O. Box 760**
**NL-3000 DK Rotterdam(NL)**
(84) **BE CH DE ES FR GR IT LI NL SE AT**

Applicant: **UNILEVER PLC**
**Unilever House Blackfriars P.O. Box 68**
**London EC4P 4BQ(GB)**
(84) **GB**

(72) Inventor: **De Boer, Bernardus,Cornelis,Joseph**
**Van Aerssenlaan 36c**
**NL-3039 KD Rotterdam(NL)**
Inventor: **Kivits, Gerardus Adrianus Antonius**
**Swinsedreef 12**
**NL-3335 AR Rockanje(NL)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) **Low-calorie food products.**

(57) The invention pertains to the use of non-fermentable dietary fibres as anti-anal-leakage agents in low-calorie food products, and in particular to the use of such fibres having an average particle lengths of 50 or more micrometers. Products can be formulated.

EP 0 375 031 A2

## LOW-CALORIE FOOD PRODUCTS

The present invention relates to low-calorie food products comprising non digestible polyol fatty acid polyesters.

In the western world 30 to 50 % of the energy intake is due to the consumption of fats and oils. Of this amount about 40 % is consumed as 'visible' fat, such as butter, margarine, lard, shortening and edible oils, particularly in the wide variety of baked products, such as pastries, biscuits, cakes, cream-fillings, snacks and like products.

In view of the health hazards connected to obesity and unbalanced fat-intake there is a continued interest in food products having a reduced caloric content. An attractive route to reduction of the caloric content in food products, such as in particular the above-referred-to baked and snack products, is replacement of conventional digestible fats and oils by non-digestible fat substitutes.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body.

Edible fat-containing products comprising indigestible polyol fatty acid polyesters are known in the art, and described in e.g. US 3,600,186, US 4,005,195, US 4,005,196, US 4,034,083 and EP 0 233 856, and EP 0 235 836.

In addition to health hazards attached to unbalanced fat-intake also the too limited intake of dietary fibres in the average western diet is believed to have a negative effect upon the general metabolism. Accordingly, food products having reduced caloric content and including (increased) levels of dietary fibres without adverse effects on product texture, appearance and mouthfeel are attractive.

In US 4,461,782 baked products are described comprising a combination of a liquid polyol fatty acid polyester and microcrystalline cellulose. The baked products further include certain amounts of sufficiently high melting fatty acids as agents to prevent anal leakage (i.e. the free leakage of liquid polyester through the anal sphincter) potentially attached to the intake of considerable amounts of liquid polyester.

Although with the disclosed combination of liquid polyol fatty acid polyesters and microcrystalline cellulose very significant calorie-reductions can be achieved, the necessity to include solid fatty acids is undesirable in view of the present understanding about health aspects attached to the use of highly saturated fatty acids or fats, in view of the calorie-reduction counteracting effects thereof, and in view of the attached restrictions upon compositional freedom.

US 4,774,095 describes filling-containing, dough-based products comprising 0.1 to 5 %, by weight of the filling, of a thixotropic cohesive network of cellulosic fibrils and microfibrils dispersed in the aqueous phase of the product. The particle lengths of said fibrils are described to usually be in the range of 10 to 1,000 micrometers, the majority of the fibrils having a length of 100 to 250 micrometers. The dough of said products contain a shortening which may comprise the non-absorbable, non-digestible polyol fatty acid polyesters and anti- anal leakage agents as disclosed in US 4,005,196.

Also the addition of anti-anal-leakage agents, such as the solid polyol fatty acid polyesters described in e.g. US 4,005,195, which do not suffer from added caloric content or increased intake of saturated fatty acids, may introduce, possibly simultaneous to anal leakage, constipation as a result of the intake of considerable amounts of high-melting (above body temperature) polyesters. Such addition is therefore, as also product formulation-wise, not always attractive.

It has now been found that in low-calorie products comprising polyol fatty acid polyesters, the fibres themselves can suitably be used to avoid or reduce any problem of anal leakage in particular when selected on the basis of a relatively high fibre particle length.

It has been found that such use and in particular such a selection of dietary fibres avoids or significantly reduces both the problem of anal leakage and the problem of constipation.

Inclusion of the dietary fibres in accordance with the invention allows a selection of polyol fatty acid polyesters with less regard for the potential problem of anal leakage and therefore improved optimization towards the requirements and characteristics of the particular low-calorie food product.

Accordingly, in a first aspect the present invention relates to the use of non-fermentable dietary fibres as anti-anal-leakage agents in low-calorie food products comprising non-digestible single-blend polyol fatty acid polyesters.

In a further aspect the present invention relates to the use of non-fermentable dietary fibres having an

2

average particle length of 50 micrometers or more, as anti-anal leakage agents in low-calorie food products comprising non-digestible polyol fatty acid polyesters.

In still a further aspect the present invention relates to low-calorie food products comprising non-digestible polyol fatty acid polyesters and an anti-anal leakage agent selected from the group of non-fermentable dietary fibres having an average particle length of 50 micrometers or more.

Dietary fibres suitable for use in the products of the present invention are non-fermentable dietary fibres, i.e. those fibre types which are substantially non-susceptible to fermentative degradation by bacteria in the large intestine.

In this specification by 'substantially non-susceptible to fermentative degradation' is meant that less than 30 % by weight of the initial intake of fibres is affected by fermentative degradation.

Typical examples of such non-fermentable dietary fibres are fibres of the lignin type, which are three-dimensional non-polysaccharide polymers containing phenylpropane units derived from e.g. sinapyl-, cinnamyl- or p-coumaryl alcohols, fibres of the cellulose type, which are linear polysaccharide polymers based upon beta-glucose with 1,4-links, and lignin-protected fibres of the hemi-cellulose type, which are a heterogeneous group of polymeric compounds based upon a structural backbone of either beta-glucose or xylose, and constitute that part of the plant cell wall soluble in dilute alkali after removal of pectic substances. In particular, non-fermentable dietary fibres of the cellulose type have been found suitable for application in the present invention.

Suitable sources of non-fermentable fibres for use in accordance with the present invention may be natural materials, such as wood, cotton, food materials, fibre preparations and concentrates derived from natural food materials or industrial (waste) materials, or chemically modified fibre products, such as e.g. microcrystalline cellulose being obtained from natural cellulose by partial acid hydrolysis.

The particular source or chemical structure of the non-fermentable dietary fibre being less critical, preferred non-fermentable fibres should have an average particle length of 50 micrometers or more, more preferably an average particle length of 80 micrometers or more, and most preferably a length of within the range of 100 to 200 micrometers.

In this specification the term 'average particle length' is intended to refer to the number-average particle length of the overall fibre length distribution considering the top-end of the particle length distribution corresponding to 99 % by weight of the fibre composition.

The non-fermentable dietary fibre may be included in the low-calorie products of the invention in amounts of up to 60 % by weight of the overall product. Dependent upon product type and level of polyol fatty acid polyester, amounts of fibre material as low as 1 % by weight may already be effective to avoid risk of anal leakage, amounts of over 2, such as 5 to 50 % in most cases being effective to avoid risk of anal leakage and constipation even at relatively high levels of polyol fatty acid polyesters.

In products organoleptically sensitive to high levels of fibres, such as e.g. meat products, amounts within the range of from 2 to 15 %, and in particular from 5 to 10 % are preferred. For products less organoleptically sensitive to fibre-inclusion amounts of 10 to 50 %, and in particular 25 to 50 % by weight are preferred.

The present invention is based upon the finding that non-fermentable fibres can be very suitably be used as anti-anal-leakage agents. In general they are used as the single agent to avoid or significantly reduce the phenomenon of anal leakage and/or constipation potentially attached to the use of considerable amounts of indigestible polyol fatty acid polyesters.

However, for reasons of product rheology it may be required to include relatively limited levels of above-body-temperature solids, i.e. the so-called inclusion of hardstock well-known in conventional fat technology. Frequently such hardstock solids will be included as part of the indigestible single-blend polyol fatty acid polyester component discussed hereunder in greater detail.

A second essential component of the low-calorie food products in accordance with the present invention are non-digestible polyol fatty acid polyesters to partially or fully replace the conventional triglyceride fat components.

The indigestible polyol fatty acid polyesters employed in the present invention are fatty acid polyesters derived from any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of the preferred sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alphamethylglucoside. The sucrose polyol is preferred most.

Suitable indigestible polyol fatty acid polyesters are those of which, on an average, 70 % or more of the polyol hydroxyl groups have been esterified with fatty acids. Preferably polyol fatty acid polyesters are used

3

with higher degrees of conversion, in particular polyol fatty acid polyesters of which, on an average, 85 % or more or even 95 % or more of the polyol hydroxyl groups have been esterified with fatty acids.

For the purposes of the present invention by indigestibility, which is closely linked to the degree of esterification and the chain lengths of the fatty acid residues, is meant that at least about 70 % by weight of the material concerned is not digested.

Fatty acids per se or naturally occurring fats and oils may be used as source for the fatty acid residues in the polyol fatty acid polyesters. The selection of the appropriate blend of fatty acids is in particular determined by the required melting characteristics of the resulting polyol fatty acid polyester, and in general will be a blend of $C_8$-$C_{22}$ fatty acids. If necessary, conventional techniques may be used to provide desired melting characteristics. Suitable such techniques include full or partial hydrogenation, interesterification, transesterification and fractionation, and may be used before or after conversion of the polyols to polyol fatty acid polyesters. Suitable sources of the fatty acid residues may be of animal, marine or vegetable origin, such as coconut oil, palmkernel oil, palm oil, butter fat, soybean oil, safflower oil, cotton seed oil, rapeseed oil, poppy seed oil, corn oil, sunflower oil, groundnut oil, marine oils and mixtures thereof. Preferred fatty acid sources are palm oils, partially hydrogenated palm oils, palm kernel oils, partially or fully hydrogenated palm kernel oils, soybean oils, partially hydrogenated soybean oils and partially or fully hydrogenated marine oils.

In this specification the mixture of polyol fatty acid polyesters compounds resulting from a single synthesis reaction of a polyol with a suitable blend of fatty acid residues, is referred to as single-blend polyol fatty acid polyesters. Instead of single-blend polyol fatty acid polyesters, in which the fatty acid residues will be randomised over the polyol molecules, also a mixture or blend of separately synthesized polylol fatty acid polyesters may be used, the blend of separately synthesized polyesters corresponding to a (partially) non-random distribution of the fatty acid residues over the polyol molecules. Selection of single or blended polyol fatty acid polyesters is determined by the desired melting characteristics and rheology in the low-calorie food product.

Preferred polyol fatty acid polyesters for inclusion in the low-calorie food products of the invention are those characterised by melting profiles corresponding to combined liquid and solid fractions over at least part of the temperature range from ambient to about 40° C.

In general, the indigestible polyol fatty acid polyester component is included in the low-calorie food products in amounts of 10 to 100 % of fat-replacement, calculated by weight of the overall fat level of the product, replacement levels of 30 to 100 %, or even 50 to 100 % being preferred.

Where product formulation and in particular the fibre - polyester ratio as specified hereunder, so allows, full replacement of the conventional fat component by the indigestible polyol fatty acid polyesters is preferred most.

Preferred products for embodiment of the present invention have overall fat levels of 10 to 50 % by weight of the product.

Although absolute levels of both the fibre and polyester components are important to come to the health advantages attached to the use thereof, an important aspect of the present invention are the relative amounts in which they are included to ensure optimal effectiveness. Preferred weight ratios of fibre to polyester lie within the range of from 1:4 to 2:1, ratios of 1:2 to 1:1 being preferred most.

In a preferred embodiment the dietary fibre component of the low-calorie food products in accordance with the present invention is intimately admixed with and aggregated by the polyester component. In this way a polyester coating of the fibres is provided which contributes to the mouthfeel characteristics of the food product by masking any textural negatives possibly attached to the relatively high levels of the fibre component.

For the class of sweet or sweetened low-calorie food products such as in particular chocolate and candy products and cakes and biscuits, it may be further advantage to use an artificial or low-calorie sweetener in combination with the indigestible polyol fatty acid polyester and the non-fermentable dietary fibre components, to provide low-calorie food products having an even further reduced caloric content. Suitable such artificial or low-calorie sweeteners include aspartame (phenylalanin), saccharin, cyclamate, thaumatin and the like. They are normally included in amounts of from 0.1 to 5 % by weight of the food product.

It may also be of interest to use slower digestible sweeteners such as sorbitol or fructose in combination with the indigestible hard-fat substitute of the invention to provide low-calorie food products particularly suitable in diabetic diets. Such sweeteners are included in similar amounts as conventional sugars, i.e. in amounts of 30 to 55 % by weight of the final product.

The low-calorie food products according to the present invention may comprise in addition to invention-specific components a great variety of ingredients conventionally found in bakery, baked, snack or meat

4

products, such as flours, e.g. wheat, corn or rye flours, proteins, meat components, conventional triglyceride fats and oils, fruits and nuts, egg and milk components, sugar, glucose (syrup), as well as minor ingredients including anti-oxidants, such as naturally present or added tocopherols, citric acid or salt, ascorbic acid or salt, butylated hydroxytoluene, -anisole or -quinone, flavouring agents, salt, herbs, taste enhancers, vitamins, such as in particular the fat-soluble vitamins, proteins, butter- or skimmilk, salt, emulsifiers, such as mono- or diglycerides, lecithin, and the like.

The low-calorie food products may be final products, i.e. sold ready-to-eat, or may be intermediate products, optionally in frozen form, requiring further preparation by oven, frying pan or microwave. Suitable low-calorie food products include puff pastries, cakes, cake mixes, doughs, biscuits, crisps, candy and chocolate products, meat snacks, frankfurters, sausages, hamburgers, peanut butter and spreads, deep-fried products, chips and crisps and like products.

The invention is now further illustrated with reference to the following tests and examples. Percentages are given by weight of the overall composition unless indicated otherwise.

TEST EXPERIMENTS

Using the rat as an animal model, the interaction of liquid sucrose fatty acid polyester (derived from soybean oil fatty acids; degree of conversion - over 95 %) with fibres differing in nature and average particle length were tested with respect to the occurrence and severity of anal oil leakage.

During the experiments the test animals were fed a basic diet having the following composition:

| ingredient | per 1000 kcal |
|---|---|
| maize starch | 163 g |
| casein | 62 g |
| standard mineral mix | 5 g |
| standard vitamin mix | 1 g |
| lard | 17 g |
| sunflower seed oil | 4 g |

The liquid sucrose fatty acid polyester and the dietary fibre material were added on top of the diet. The diets were prepared once a week and supplied to the animals three times a week. Water was fed ad libitum.

The number of animals pertest group was 12, the experimental period lasting for 12 days, the periods in-between experimental periods being 3 weeks. During the experimental periods (12 days per period) anal leakage was scored daily (days 3 to 12) in the afternoon, the severity of leakage being scored at four levels: 0 = min, 1, 2, 3 = max). The individual results in the Tables are based upon 120 observations.

In a first experiment non-fermentable dietary cellulose fibre was compared to orange pulp, a natural fibre source composed mainly of water soluble and easily fermentable types of fibre. Experiments were carried out at two levels of liquid sucrose fatty acid polyester and two levels of dietary fibre. Results are presented in Table I.

TABLE I

| fibre type | amount (g/1000 kcal) | 20 g polyester/1000 kcal severity | 30 g polyester/1000 kcal severity |
|---|---|---|---|
| cellulose | 15 | 1.8 | 2.7 |
| cellulose | 30 | 0.1 | 1.7 |
| orange pulp | 15 | 2.8 | 2.9 |
| orange pulp | 30 | 2.7 | 2.9 |

The above results clearly indicate that non-fermentable fibres are much more effective as anti-anal leakage agents than fermentable fibres.

In a second set of experiment there were used non-fermentable dietary fibres sold under the trade name SOLKA-FLOC® ex James River Corporation having different average particle lengths:

| type | average particle length (micrometers) |
|------|---------------------------------------|
| 1    | 10                                    |
| 2    | 25                                    |
| 3    | 50                                    |
| 4    | 100                                   |
| 5    | 100                                   |

Adding liquid sucrose fatty acid polyester to the diet in an amount of 40 g per 1000 kcal, the following results (Table II) were obtained at two levels of fibre addition:

TABLE II

| fibre type | 40 g fibre/1000 kcal | | 60 g fibre/1000 kcal | |
|------------|------------|----------|------------|----------|
|            | occurrence | severity | occurrence | severity |
| 1          | 100%       | 2.8      | 100%       | 2.0      |
| 2          | 100%       | 2.6      | 100%       | 1.6      |
| 3          | 100%       | 2.1      | 70%        | 0.7      |
| 4          | 60%        | 0.6      | 32%        | 0.3      |
| 5          | 77%        | 1.0      | 23%        | 0.2      |

The above results clearly indicate the effect of increasing average particle length and level of the dietary fibre.

It will be appreciated that for the sake of experimental clarity the liquid sucrose polyester levels that were used in the animal experiments were chosen very high. It will further be appreciated that since the average human diet already comprises significant levels of fibre materials, suitable ratios between fibre and polyester in the human diet can be accordingly somewhat reduced product-formulation wise.

PRODUCT EXAMPLE A

Two cake mix compositions were prepared according to the following recipe:

| ingredient | I | II |
|---|---|---|
| wheat flour | 42.9% | 39.9% |
| batter improver | 1.6% | 1.6% |
| sugar | 35.8% | 33.8% |
| baking powder | 1.6% | 1.6% |
| salt | 0.5% | 0.5% |
| triglyceride fat (partially hardened palm oil) | 17.6% | 12.6% |
| sucrose fatty acid polyester (1) | - | 5.0% |
| cellulose fibre (2) | - | 5.0% |

(1) derived from a fully hardened palm kernel fatty acid blend; degree of conversion over 95%
(2) SOLKA-FLOC® ex James River Corporation, type UF-900, average particle length: 110 micrometers

To each of the two cake mix compositions (400 grams) was added 125 grams of egg. Subsequently, homogeneous doughs were prepared using a small amount of water in the case of composition II, and baked in a conventional oven at 165°C for about 50 minutes. The resulting cakes had good and fully comparable consistency, texture, and palatability.


PRODUCT EXAMPLE B

Three beefburger compositions of the following formulation were prepared:

| ingredient | I | II | III |
|---|---|---|---|
| beef (25 % fat) | 81.0% | - | - |
| beef (10 % fat) | - | 66.0% | 66.0% |
| chopped onion | 10.9% | 10.9% | 10.9% |
| spice mix | 1.3% | 1.3% | 1.3% |
| water | 2.2% | 2.2% | 2.2% |
| rusk/soya | 4.7% | 4.7% | 4.7% |
| sucrose fatty acid polyester (1) | - | 10.0% | - |
| sucrose fatty acid polyester (2) | - | - | 10.0% |
| cellulose fibre (3) | - | 5.0% | 5.0% |

(1) derived from a tough hardened blend of soybean oil fatty acids; degree of conversion over 95%
(2) derived from a blend of 62% fully hardened palm kernel and 38% of fully hardened palm oil fatty acids; degree of conversion over 95%
(3) SOLKA-FLOC® ex James River Corporation, type UF-900, average particle length: 110 micrometers

Patties of about 60 grams were pressed on a hand operated burger press and grilled until they reached a centre temperature of 70°C. The burgers had about equal product quality, cooking losses being somewhat lower for the fibre-containing burgers.


**Claims**

1. Low-calorie food products comprising non-digestible polyol fatty acid polyesters and an anti-anal leakage agent selected from the group of non-fermentable dietary fibres having an average particle length of 50 micrometers or more.
2. Food product according to claim 1 in which the particle length is within the range of 100 to 200

7

micrometers.

3. Food product according to claim 1 or 2 in which the fibres are included in an amount of 2 to 50 % by weight.

4. Food product according to any one of the preceding claims in which the product has an overall fat level of 10 to 50 % by weight.

5. Food product according to any one of the preceding claims in which the level of the polyol fatty acid polyesters is within the range of 30 to 100 % by weight of the overall fat level.

6. Food product according to any one of the preceding claims in which the ratio of the fibres to the polyol fatty acid polyesters is within the range of from 1:4 to 2:1.

7. Food product according to any one of the preceding claims in which the polyol fatty acid polyesters have an average degree of conversion of 95 % or more.

8. Food product according to any one of the preceding claims in which the polyol fatty acid polyesters are derived from a fatty acid source selected from the group consisting of palm oils, partially hydrogenated palm oils, palm kernel oils, partially or fully hydrogenated palm kernel oils, soybean oils, partially hydrogenated soybean oils and partially or fully hydrogenated marine oils.

9. Use of non-fermentable dietary fibres as anti-anal-leakage agents in low-calorie food products comprising non-digestible single-blend polyol fatty acid polyesters.

10. Use of non-fermentable dietary fibres having an average particle length of 50 micrometers or more, as anti-anal leakage agents in low-calorie food products comprising non-digestible polyol fatty acid polyesters.